(19) Europäisches Patentamt
European Patent Office
Office européen des brevets

(11) EP 2 803 951 B1

(12) EUROPÄISCHE PATENTSCHRIFT

(45) Veröffentlichungstag und Bekanntmachung des Hinweises auf die Patenterteilung:
26.02.2020 Patentblatt 2020/09

(51) Int Cl.:
G01F 23/284 (2006.01)　　　G01S 13/42 (2006.01)

(21) Anmeldenummer: 13168357.5

(22) Anmeldetag: 17.05.2013

(54) **Topologiebestimmung für Schüttgüter**

Topology determination for bulk materials

Détermination de la topologie pour des matériaux en vrac

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.11.2014 Patentblatt 2014/47**

(73) Patentinhaber: **VEGA Grieshaber KG**
**77709 Wolfach (DE)**

(72) Erfinder:
• **Welle, Roland**
**77756 Hausach (DE)**
• **Griessbaum, Karl**
**77796 Mühlenbach (DE)**
• **Fehrenbach, Josef**
**77716 Haslach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**EP-A1- 2 315 045　　WO-A1-2010/003656**
**DE-A1- 3 735 905　　DE-A1- 4 339 441**
**FR-A1- 2 907 546　　US-A- 4 219 814**
**US-A1- 2013 060 528　　US-B2- 6 986 294**

EP 2 803 951 B1

**Beschreibung**

Gebiet der Erfindung

Die vorliegende Erfindung betrifft die Füllstandmessung. Insbesondere betrifft die Erfindung ein Messgerät zum Bestimmen der Topologie eines Schüttguts, die Verwendung eines Messgeräts zur Bestimmung eines Volumenstroms eines Schüttguts, die Verwendung eines Messgeräts zur Bestimmung der Masse eines Schüttguts, ein Verfahren zum Bestimmen der Topologie eines Schüttguts, ein Programmelement und ein computerlesbares Medium.

Technischer Hintergrund

Schüttgüter, die in einem Behälter gespeichert sind oder sich auf einem Förderband befinden, weisen im Regelfall eine unregelmäßige, unebene Oberfläche auf. Insbesondere kann es zur Ausbildung eines Schüttkegels oder eines Abzugstrichters kommen.

Füllstandmessgeräte bestimmen bei dieser Konstellation den Füllstand oft ungenau, wenn lediglich die Entfernung zu einem einzigen Punkt an der Füllgutoberfläche bestimmt wird.

WO 2010/003656 A1 beschreibt ein Verfahren zur Auswertung von Radarsignalen einer in industriellen Umgebungen eingesetzten Radarsensorik. Die von der Antenne in einem Erfassungsraum erfassten Einzelziele werden mit ihren Entfernungs- und Winkelwerten sowie mit den Intensitätswerten aufgenommen, wobei aus den aufgrund ihrer Winkel- und/oder Entfernungswerte nach einem vorgegebenen Auswertungsmaßstab zusammengefassten Einzelzielen eine im Erfassungsraum liegende Oberfläche definiert und die nicht dieser Oberfläche zuzuordnenden, zwischen der Oberfläche und der Antenne gelegenen Einzelziele als Kollisionsziele klassifiziert und gesondert ausgewertet werden und die auf der der Antenne abgewandten Seite der Oberfläche gelegenen Einzelziele als Geisterziele klassifiziert werden.

FR 2 907 546 A1 beschreibt ein System zur Reliefbestimmung der Oberfläche eines Granulats in einem petrochemischen Reaktor. Das System weist eine Antennenanordnung, eine Echokurvenerzeugungseinheit zum Erzeugen einer Echokurve aus dem reflektierten und von der Antennenanordnung empfangenen Sendesignal, eine Stellvorrichtung zum Ändern der Hauptabstrahlrichtung der Antennenanordnung, und eine Auswerteeinheit zum Bestimmen des Reliefs der Oberfläche des Granulats auf, wobei die Auswerteeinheit zur Bestimmung der Topologie eine Vielzahl von Echokurven in verschiedenen Hauptabstrahlrichtungen erfasst.

DE 37 35 905 A1 beschreibt ein Verfahren und eine Vorrichtung zur Volumenstrommessung auf Bandförderern mittels Laser-Entfernungsprofilscanner.

KK:ps

Zusammenfassung der Erfindung

Es ist eine Aufgabe der Erfindung, eine verbesserte Bestimmung des Füllstandes von Schüttgütern, die in einem Behälter gespeichert sind, oder des Massestroms eines Schüttguts auf einem Förderband anzugeben.

Diese Aufgabe wird durch die Merkmale der unabhängigen Ansprüche gelöst. Weiterbildungen der Erfindung ergeben sich aus den übrigen Ansprüchen und der folgenden Beschreibung.

Gemäß einem ersten Aspekt der Erfindung ist ein Messgerät zum Bestimmen eines Schüttguts angegeben, welches eine Antennenanordnung, eine Echokurvenerzeugungseinheit, eine Stellvorrichtung und eine Auswerteeinheit aufweist.

Die Antennenanordnung dient dem Aussenden eines Sendesignals in eine Hauptabstrahlrichtung der Antennenanordnung und dem Empfang des zumindest an einer Oberfläche des Schüttguts reflektierten Sendesignals. Das reflektierte und von der Antennenanordnung aufgenommene bzw. empfangene Sendesignal kann auch als Empfangssignal bezeichnet werden.

Die Echokurvenerzeugungseinheit ist zum Erzeugen einer Echokurve aus dem reflektierten und von der Antennenanordnung empfangenen Sendesignal ausgeführt. Die Echokurve spiegelt hierbei die Signalstärke bzw. die Amplitude des reflektierten Sendesignals über einen Entfernungsmessbereich des Messgeräts wider. In anderen Worten bildet die Echokurve die Abhängigkeit der Amplitude des empfangenen, reflektierten Sendesignals von der Weglänge, die der entsprechende Signalanteil seit dem Aussenden des Sendesignals bis zu dessen Empfang durch die Antenne zurückgelegt hat, ab.

Eine derartige Echokurve weist im Regelfall ein Maximum (Peak) auf, welches auf die Reflexion des Sendesignals an der Füllgutoberfläche zurückzuführen ist. Es können noch weitere Maxima in der Echokurve enthalten sein, die auf Reflexionen an Störstellen im Behälter, etc. zurückzuführen sind.

Das Messgerät oder zumindest dessen Antenne ist mittels der Stellvorrichtung steuerbar, so dass die Hauptabstrahlrichtung der Antennenanordnung mit Hilfe der Stellvorrichtung geändert werden kann, so dass eine Serie von Echokurven unter verschiedenen Hauptabstrahlrichtungen erzeugt werden kann. Insbesondere kann eine einzige, mechanisch oder elektronisch "schwenkbare" Antenne vorgesehen sein. Im Falle der mechanischen Verstellung der Antenne ist kein Antennenarray erforderlich. Im Falle einer elektronischen Verstellung der Antenne wird beispielsweise ein Array von Einzelantennen zu einer Gesamtabstrahleinrichtung kombiniert.

Mit Hilfe der Auswerteeinheit kann dann die Topologie der Schüttgutoberfläche bestimmt werden. Unter dem Begriff "Topologie" der Schüttgutoberfläche bzw. des Schüttguts ist hierbei das Oberflächenprofil, also der Oberflächenverlauf der Schüttgutoberfläche zu verstehen. Der Oberflächenverlauf kann entlang einer Linie durch ein eindimensionales Abscannen der Oberfläche bestimmt werden (hierbei handelt es sich bei dem bestimmten Oberflächenprofil um einen ebenen, vertikalen Schnitt durch die Oberfläche des Schüttguts) oder, im Gegensatz zum vorher genannten eindimensionalen Abscannen der Oberfläche, durch ein zweidimensionales Abscannen der Oberfläche. In diesem Fall handelt es sich also um die Bestimmung der Topologie der Schüttgutoberfläche in drei Dimensionen.

Um nun die Topologie der Schüttgutoberfläche in zwei Dimensionen oder in drei Dimensionen zu bestimmen, führt die Auswerteeinheit zumindest die folgenden Schritte durch:

Zunächst wird eine erste Entfernungszelle festgelegt, bei der es sich um ein bestimmtes Entfernungsintervall zwischen einer ersten Entfernung und einer zweiten Entfernung von der Antennenanordnung in der Echokurve handelt. Im nächsten Schritt wird einer Maximakurve bestimmt, welche für jede Hauptabstrahlrichtung innerhalb der ersten Entfernungszelle im Vergleich zu den übrigen Echokurven die größte Signalstärke aufweist. Da ja jede Echokurve unter einer bestimmten Hauptabstrahlrichtung aufgenommen wurde, kann jede Echokurve eindeutig durch die Orientierung der Hauptabstrahlrichtung identifiziert werden. Auch werden lokale Maxima auf der Maximakurve, die Winkelkoordinaten der größten Signalstärke innerhalb der ersten Entfernungszelle sind, bestimmt.

Unter den Koordinaten eines solchen Messpunktes sind im Folgenden die die Hauptabstrahlrichtung charakterisierenden Winkel, unter der die entsprechende Echokurve erzeugt wurde, sowie die Lage (der "Ort") der größten Signalstärke in der Echokurve zu verstehen. Unter der Größe der Signalstärke ist die Amplitude der Echokurve am Ort der größten Signalstärke zu verstehen. Dieser "Ort" entspricht der mit der größten Signalstärke korrespondierenden Entfernung.

Die oben beschriebenen Schritte können dann für die weiteren Entfernungszellen der Echokurven durchgeführt werden.

Somit ist es möglich, die Echokurven in mehrere, aneinander gereihte Entfernungszellen aufzuteilen, oder zumindest einen bestimmen Abschnitt der Echokurven in mehrere Entfernungszellen aufzuteilen, für welche die oben beschriebenen Schritte durchgeführt werden.

In anderen Worten werden mehrere Echokurven jeweils unter einem anderen Winkel (also unter einer anderen Hauptabstrahlrichtung der Antennenanordnung) aufgenommen. Die Hauptabstrahlrichtung der Antennenanordnung kann mechanisch durch geeignetes Verstellen der Antennenanordnung und/oder eines Reflektors, der das Sendesignal auf seinem Weg von der Antenne zur Schüttgutoberfläche reflektiert, vorgenommen werden. Auch ist es möglich, die Hauptabstrahlrichtung elektronisch zu verstellen, beispielsweise indem ein entsprechend angesteuerter Antennenarray vorgesehen ist.

Nach Aufnahme der Serie von Echokurven wird die erste Entfernungszelle der Echokurven definiert und dann wird zu jeder Echokurve das Maximum der Echokurve in dieser Entfernungszelle identifiziert. Als nächstes wird bestimmt, welches Maximum der verschiedenen Echokurven das größte Maximum ist und es werden dessen Koordinaten und dessen Größe bestimmt. Diese Schritte werden dann für weitere Entfernungszellen durchgeführt. Je nachdem, ob die Hauptabstrahlrichtung der Antenne in eine Raumrichtung oder in zwei Raumrichtungen geändert wurde, kann hieraus dann eine Schnittlinie oder eine dreidimensionale Darstellung der Schüttgutoberfläche berechnet werden.

Gemäß einer Ausführungsform der Erfindung erstellt die Auswerteeinheit eine Ergebnismatrix, welche die zu den lokalen Maxima der Signalstärke korrespondierenden Orte für jede Entfernungszelle und deren Koordinaten (Entfernung, Hauptabstrahlrichtung) enthält.

Gemäß einer weiteren Ausführungsform der Erfindung bestimmt die Auswerteeinheit unter Verwendung der in den oben beschriebenen Schritten erhaltenen Daten den Füllstand des in einem Behälter befindlichen Schüttguts und/oder das Schüttgutvolumen des Schüttguts.

Gemäß einer weiteren Ausführungsform der Erfindung ist die Stellvorrichtung zur Änderung der Hauptabstrahlrichtung der Antennenanordnung in zwei Dimensionen ausgeführt.

Gemäß einer weiteren Ausführungsform der Erfindung ist die Stellvorrichtung zur Änderung der Hauptabstrahlrichtung der Antennenanordnung unter Zuhilfenahme einer mechanischen Verstellvorrichtung ausgeführt, mit Hilfe derer die Ausrichtung der Antennenanordnung mechanisch verstellt werden kann.

Gemäß einer weiteren Ausführungsform der Erfindung weist die Stellvorrichtung zur Änderung der Hauptabstrahlrichtung der Antennenanordnung einen Reflektor und eine mechanische Verstellvorrichtung zur Änderung der Lage des Reflektors und somit zur Änderung der Hauptabstrahlrichtung der Antennenanordnung auf.

Auch kann vorgesehen sein, dass sowohl die Antennenausrichtung als auch der Reflektor mit Hilfe der Stellvorrichtung eingestellt werden können.

Gemäß einer weiteren Ausführungsform der Erfindung ist das Messgerät als Füllstandmessgerät ausgeführt. Insbesondere kann das Messgerät als Pulsradargerät oder FMCW-Füllstandmessgerät (FMCW: Frequency Modulated Continuous Wave) ausgeführt sein.

Gemäß einem weiteren Aspekt der Erfindung ist die Verwendung eines oben und im Folgenden beschriebenen Messgeräts zur Bestimmung eines Volumenstroms eines Schüttguts, das sich auf einem Förderband befindet, angegeben.

Gemäß einem weiteren Aspekt der Erfindung ist die Verwendung eines oben und im Folgenden beschriebenen Messgeräts zur Bestimmung der Masse eines Schüttguts angegeben.

Gemäß einem weiteren Aspekt der Erfindung ist ein Verfahren zum Bestimmen der Topologie eines Schüttguts angegeben, bei dem ein Sendesignal in eine Hauptabstrahlrichtung der Antennenanordnung ausgesendet wird und das zumindest an einer Oberfläche des Schüttguts reflektierte Sendesignal von der Antennenanordnung empfangen wird. Daraufhin wird eine Echokurve aus dem reflektierten und von der Antennenanordnung empfangenen Sendesignal erzeugt, welche die Signalstärke des reflektierten Sendesignals über einen Entfernungsmessbereich des Messgeräts widerspiegelt. Daraufhin wird die Hauptabstrahlrichtung der Antennenanordnung geändert, so dass weitere Echokurven unter verschiedenen Hauptabstrahlrichtungen erzeugt werden.

Die Topologie des Schüttguts wird dann bestimmt, wobei zur Bestimmung der Topologie zumindest die folgenden Schritte durchgeführt werden:

  a) Festlegen einer ersten Entfernungszelle, bei der es sich um ein bestimmtes Entfernungsintervall handelt;

  b) Bestimmen derjenigen Echokurve der Serie von Echokurven, welche innerhalb der ersten Entfernungszelle im Vergleich zu den übrigen Echokurven die größte Signalstärke aufweist;

  c) Bestimmen der Größe und der Koordinaten der größten Signalstärke, bei denen es sich um die mit der größten Signalstärke korrespondierende Hauptabstrahlrichtung, unter welcher diese Echokurve erzeugt wurde, sowie die mit der größten Signalstärke korrespondierende Entfernung handelt; und

  d) wiederholtes Durchführen der Schritte a) bis c) für weitere Entfernungszellen.

An dieser Stelle sei daraufhingewiesen, dass die beschriebenen Messgeräte zur Durchführung sämtlicher oben und im Folgenden beschriebenen Verfahrensschritte ausgeführt sein können.

Gemäß einem weiteren Aspekt der Erfindung ist ein Programmelement angegeben, das, wenn es auf einem Prozessor eines Messgeräts ausgeführt wird, das Messgerät veranlasst, die oben und im Folgenden beschriebenen Schritte durchzuführen.

Gemäß einem weiteren Aspekt der Erfindung ist ein computerlesbares Medium angegeben, auf dem ein Programmelement gespeichert ist, das, wenn es auf dem Prozessor eines Messgeräts ausgeführt wird, das Messgerät veranlasst, die oben und im Folgenden beschriebenen Schritte durchzuführen.

Dabei kann das Programmelement Teil einer Software sein, die auf einem Prozessor des Messgeräts gespeichert ist. Auch betrifft die Erfindung ein Programmelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

Kurze Beschreibung der Figuren

Fig. 1 zeigt ein Füllstandmessgerät zur Messung eines Füllstands sowie eine durch das Messgerät erzeugte Echokurve.

Fig. 2 zeigt ein Füllstandmessgerät und dessen Richtcharakteristik sowie eine von dem Gerät erfasste Echokurve.

Fig. 3a, 3b, 3c und 3d zeigen die Erfassung von Echokurven unter unterschiedlichen Hauptabstrahlrichtungen.

Fig. 4 zeigt die Aufnahme von Echokurven unter unterschiedlichen Hauptabstrahlrichtungen.

Fig. 5 zeigt ein Flussdiagramm eines Verfahrens gemäß einem Ausführungsbeispiel der Erfindung.

Fig. 6 zeigt verschiedene Echokurven, die unter unterschiedlichen Hauptabstrahlrichtungen erfasst wurden, und eine erste Entfernungszelle.

Fig. 7 zeigt die Werte der Maxima der Echokurven der Fig. 6 in der Entfernungszelle in Abhängigkeit des Winkels der Hauptabstrahlrichtung.

Fig. 8 zeigt eine Darstellung eines Maximums gemäß einem Ausführungsbeispiel der Erfindung.

Fig. 9 zeigt die Darstellung von Maxima weiterer Entfernungszellen, die unter unterschiedlichen Hauptabstrahlrichtungen erfasst wurden.

Fig. 10 zeigt die Darstellung der aus Fig. 9 erhaltenen Maxima gemäß einem Ausführungsbeispiel der Erfindung.

Fig. 11 zeigt Echokurven, die unter unterschiedlichen Hauptabstrahlrichtungen erfasst wurden.

Fig. 12 zeigt ein Flussdiagramm eines Verfahrens gemäß einem Ausführungsbeispiel der Erfindung.

Fig. 13 zeigt eine Messanordnung gemäß einem Ausführungsbeispiel der Erfindung.

Fig. 14 zeigt eine weitere Messanordnung gemäß einem Ausführungsbeispiel der Erfindung.

Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Die vorliegende Erfindung wird insbesondere im Umfeld von Füllstandmessgeräten angewendet, wobei aber auch eine Anwendung im Bereich der Objektüberwachung oder der Massenstromerfassung möglich ist. Es kann als ein Kernaspekt der Erfindung angesehen werden, Verfahren zur Füllstandmessung, welche lediglich die Entfernung zu einem einzigen Punkt an einer Füllgutoberfläche bestimmen, derart zu erweitern, dass die Erfassung der Topologie einer Oberfläche möglich wird. Speziell in Schüttgutanwendungen können sich hierdurch wesentlich bessere Messergebnisse ergeben, unabhängig davon, auf welche Art und Weise die Topologiedaten in weiteren Berechnungsschritten ausgewertet werden sollen (denkbar: Volumenstrommessung auf Förderbändern, Massenerfassung in Behältern ...).

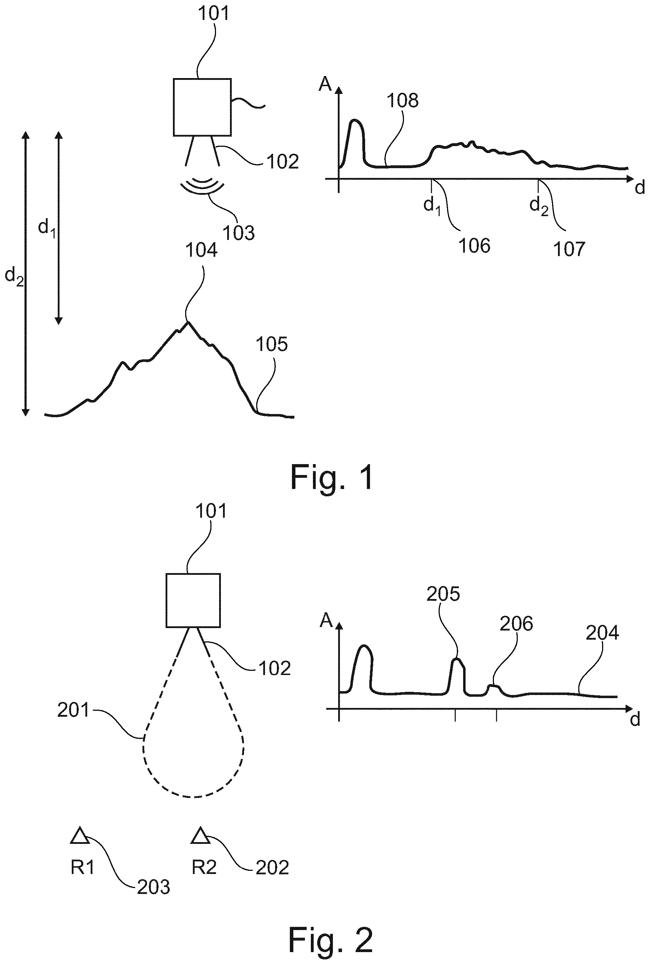

Fig. 1 zeigt eine typische Situation bei der Füllstandmessung in Schüttgutanwendungen. Ein konventionelles Füllstandmessgerät 101 strahlt über eine Sende-/Empfangseinheit 102 ein Signal 103 in Richtung des zu vermessenden Mediums ab. Das Signal 103 wird an unterschiedlichen Stellen 104, 105 der Füllgutoberfläche reflektiert, und gelangt nach entsprechender Laufzeit wieder zurück zum Füllstandmessgerät 101, wo es in geeigneter Weise empfangen und üblicherweise in eine Echokurve 108 umgesetzt wird. Die Echokurve 108 zeigt ein sehr breites Echo zwischen der Entfernung $d_1$ 106 und der Entfernung $d_2$ 107. Dieses sehr breite Echo wird auch Echoband genannt. Es ergibt sich aus der Überlagerung einer Vielzahl einzelner Reflexionen des Sendesignals 103 an der Oberfläche des zu vermessenden Schüttguts.

Fig. 2 verdeutlicht die Entstehung mehrerer Echos aus einer einzigen Blickrichtung (Hauptabstrahlrichtung) des Füllstandmessgerätes 101. Bedingt durch den Aufbau des Füllstandmessgerätes 101 und insbesondere die Geometrie der Sende- /Empfangsantenne 102 ergibt sich für die unterschiedlichen Raumrichtungen eine variable Sensitivität des Sensors, welche durch die ebenfalls in Fig. 2 dargestellte Richtcharakteristik 201 angedeutet wird. Die grafisch verdeutlichte unvollständige Fokussierung der Signale führt dazu, dass neben dem in Hauptstrahlrichtung vorhandenen Reflektor R2 202 der etwas daneben liegende Reflektor R1 203 ebenfalls messtechnisch erfasst wird. Anhand der Echokurve 204 sind die beiden Echos 205, 206 der Reflektoren 202, 203 deutlich zu erkennen. Es fällt jedoch auf, dass das Echo 206 des Reflektors R1 203 deutlich weniger Amplitude aufweist. Die Hauptursache hierfür ist neben der größeren Entfernung und der damit einhergehenden höheren Freiraumdämpfung des Signals auf dem Weg zwischen dem Füllstandmessgerät und dem Reflektor die im Vergleich zu Reflektor R2 202 schlechtere Sende- und Empfangscharakteristik 201 in Richtung des Reflektors R1 203.

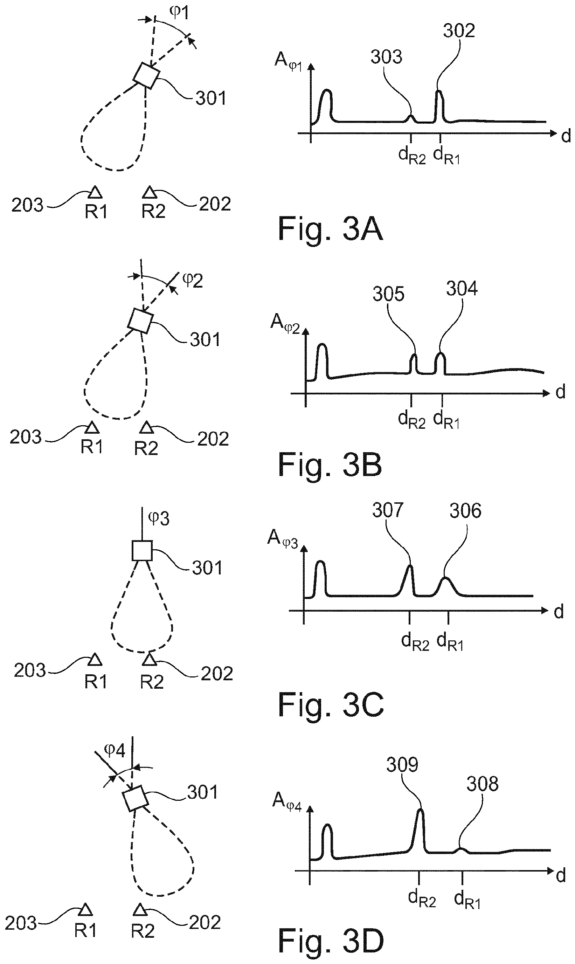

Fig. 3 zeigt - zunächst in einer zweidimensionalen Ebene - eine Abfolge von Messungen zur Durchführung des erfindungsgemäßen Verfahrens. Das erfindungsgemäße Füllstandmessgerät 301 wird durch eine geeignete mechanische Konstruktion in verstellbarer Richtung auf die Reflektoren R1 203 und R2 202 ausgerichtet.

Das Füllstandmessgerät 301 möge seinen Messzyklus bei einem Winkel der Hauptabstrahlrichtung von $\varphi_{Min} = \varphi_1$ beginnen. Unter der angedeuteten Ausrichtung des Sensors wird das Echo 302 des Reflektors R1 203 mit maximaler Amplitude abgebildet, da es sich gerade in Hauptstrahlrichtung des Sensors 301 befindet. Reflektor R2 202 befindet sich bezogen auf die aktuelle Ausrichtung des Sensors neben der Hauptstrahlrichtung, was dessen deutlich kleineres Echo 303 erklärt.

Im nächsten Schritt wird das Füllstandmessgerät 301 um einen vorgebbaren Winkel $\Delta\varphi = \varphi_2 - \varphi_1$ weitergedreht. Aufgrund der neuen Hauptstrahlrichtung werden die Echos (304, 305) der Reflektoren R1 und R2 nun etwa mit gleicher Amplitude erfasst.

Es folgen weitere Vermessungsschritte bei $\varphi = \varphi_3$ und $\varphi = \varphi_4$, wobei bei letzterem bereits das Ende des Erfassungsbereiches der Messung erreicht ist, da $\varphi_{Max} = \varphi_4$. Es ist deutlich zu sehen, dass die Maximalamplituden der erfassten Echos 306, 307, 308, 309 stark von der Position des zugehörigen Reflektors 202, 203 und von der aktuellen Ausrichtung des Füllstandmessgerätes 301 abhängen.

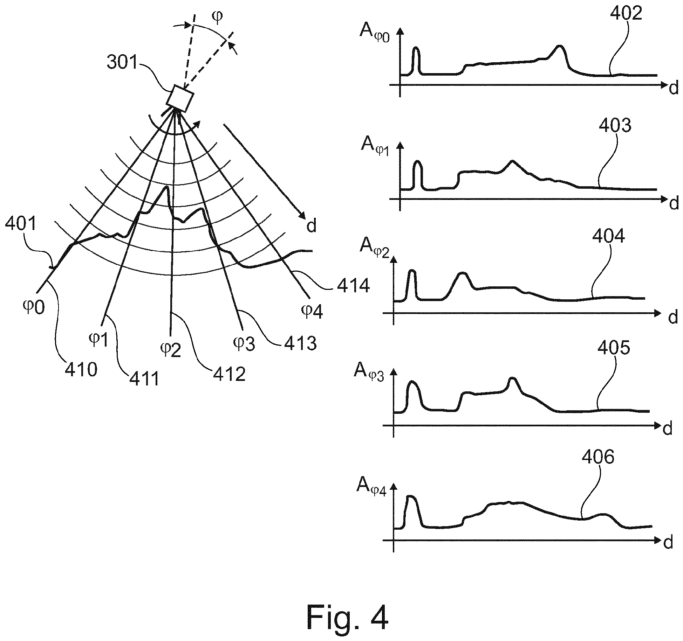

Fig. 4 verdeutlicht nun den Übergang zu einer kontinuierlich verteilten Reflexionsfläche 401 einer Schüttguthalde. Der Anschaulichkeit halber wird das erfindungsgemäße Verfahren zunächst in einer zweidimensionalen Ausführung gezeigt.

Ausgangspunkt eines Messzyklus ist zunächst die Erfassung einer Vielzahl von Echokurven 402, 403, 404, 405, 406 in verschiedenen Hauptabstrahlrichtungen der Sende-/Empfangsantennenanordnung des Füllstandmessgeräts, wobei hierzu der zu erfassende Winkelbereich (hier: $\varphi_{Min} = \varphi_0 ... \varphi_{Max} = \varphi_4$) in vorgebbarem Raster durchlaufen wird.

Im Beispiel in Fig. 4 wird die Oberfläche 401 der Schütthalde vom Sensor aus fünf unterschiedlichen Blickrichtungen ($\varphi_0, \varphi_1, \varphi_2, \varphi_3, \varphi_4$), den Hauptabstrahlrichtungen 410, 411, 412, 413, 414, vermessen. Die dabei erfassten Echokurven 402, 403, 404, 405, 406 werden zunächst in einem geeigneten Speicher abgelegt.

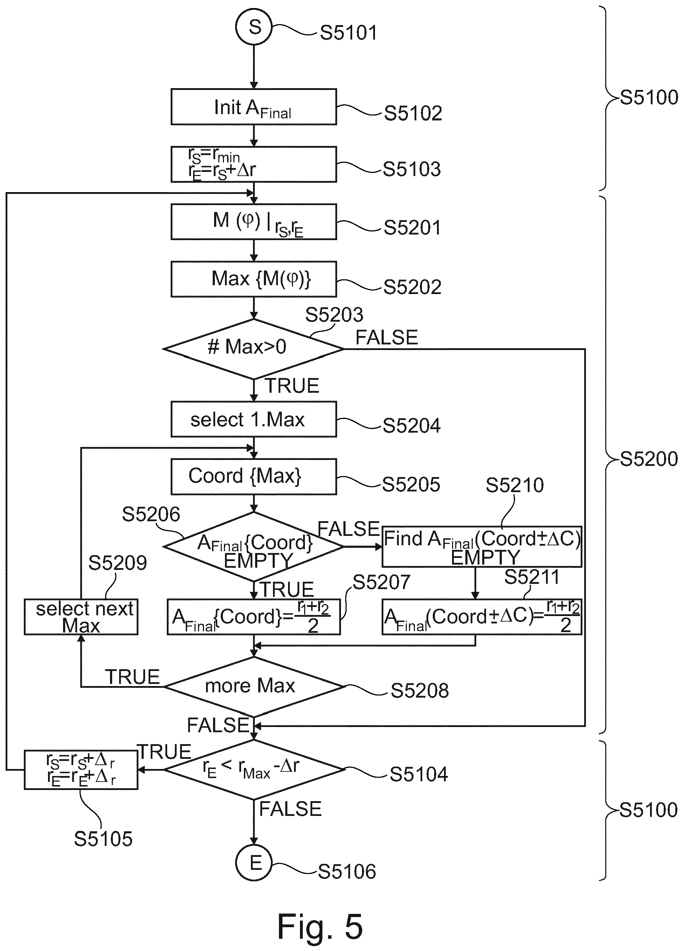

Nach Beendigung der Echokurvenerfassung setzt die eigentliche rechnerische Auswertung der Echokurven 402, 403, 404, 405, 406 das erfindungsgemäße Verfahren fort. Fig. 5 zeigt ein zugehöriges Ablaufdiagramm.

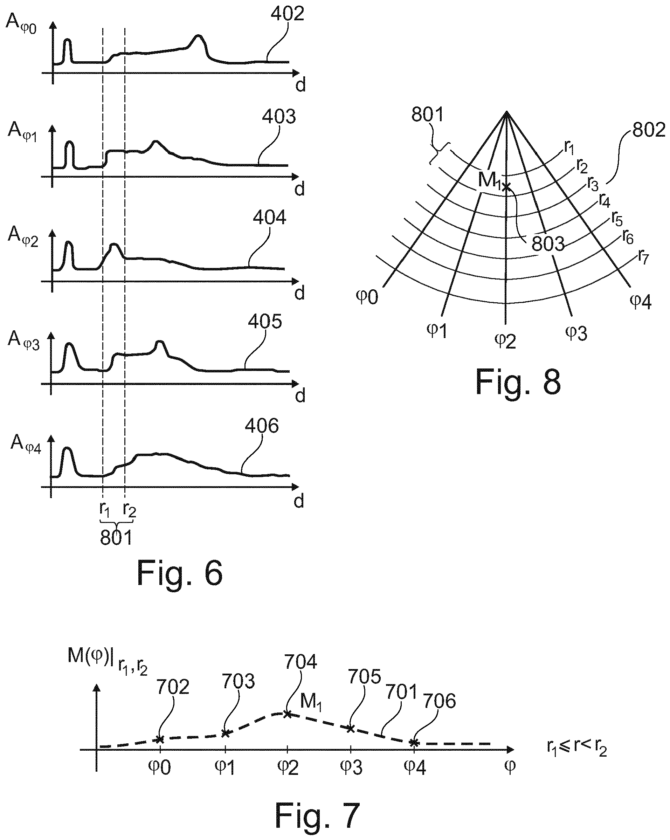

Fig. 6 bis Fig. 10 zeigen wichtige Zwischenergebnisse bei der Abarbeitung des Verfahrens. Das Verfahren beginnt im Schritt S5101. Zunächst wird im Schritt S5102 die Ergebnismatrix $A_{Final}$ 802 geleert.

Kerngedanke des Verfahrens in den weiteren Schritten ist die Auswertung der Echokurven (Fig. 5; 402, 403, 404, 405, 406) in vorab festgelegten Entfernungszellen. Im Schritt S5103 wird folglich der nächstgelegene Entfernungsstreifen vom Sensor als Untersuchungsbereich definiert (hier: $r_S = r_1$ ; $r_E = r_2$).

Fig. 6 und Fig. 8 zeigen die auf diese Art definierte Entfernungszelle 801. Im Schritt S5201 wird nun die zu diesem Entfernungsstreifen 801 gehörende Maximakurve $M(\varphi)|_{r_S;r_E}$ gebildet. Die Maximakurve 701 entsteht dadurch, dass für jeden Winkel $(\varphi_0,\varphi_1,\varphi_2,\varphi_3,\varphi_4)$ die Maximalamplitude (also die Signalstärke) der zugehörigen Echokurve 402, 403, 404, 405, 406 im vorab definierten Entfernungsbereich 801 gesucht und als Stützstelle (702, 703, ...) der Maximakurve 701 eingetragen wird.

Im Schritt S5202 werden nun die lokalen Maxima auf der Maximakurve 701 bestimmt. Im vorliegenden Fall ergibt sich ein lokales Maximum M1 704. Mit Abarbeitung der Verfahrensschritte S5203, S5204, S5205 werden die Winkelkoordinaten des lokalen Maximums M1 704 bestimmt. Im vorliegenden Fall ergibt sich als Winkelkoordinate lediglich $\left[\frac{r_1+r_2}{2}; \varphi_2\right]$ , da die Messung nur zweidimensional erfolgt. Im Falle der dreidimensionalen Messung wird hier zusätzlich ein Elevationswinkel als dritte Koordinate bestimmt. Im Schritt S5206 wird nun geprüft, ob die Ergebnismatrix 802 an der bestimmten Koordinate schon belegt ist. Da dies nicht der Fall ist, wird das Maximum M1 an der Koordinate $\left[\frac{r_1+r_2}{2}; \varphi_2\right]$ im Schritt S5207 in die Ergebnismatrix 802 übernommen (Fig. 8, 803).

In gleicher Art und Weise werden ggf. weitere vorhandene lokale Maxima in die Ergebnismatrix 802 übertragen (Schritte S5208, S5209).

Für den besonderen Fall, dass im Schritt S5206 festgestellt wird, dass die Ergebnismatrix 802 an der bestimmten Koordinate schon einen Eintrag besitzt, wird das Maximum an der jeweils ersten unbesetzten Stelle links und rechts von der detektierten Lage des Maximums eingetragen (S5210, S5211). Im vorliegenden Fall würde bei besetzter Position $\left[\frac{r_1+r_2}{2}; \varphi_2\right]$ eine doppelte Eintragung an den Positionen $\left[\frac{r_1+r_2}{2}; \varphi_1\right]$ und $\left[\frac{r_1+r_2}{2}; \varphi_3\right]$ erfolgen.

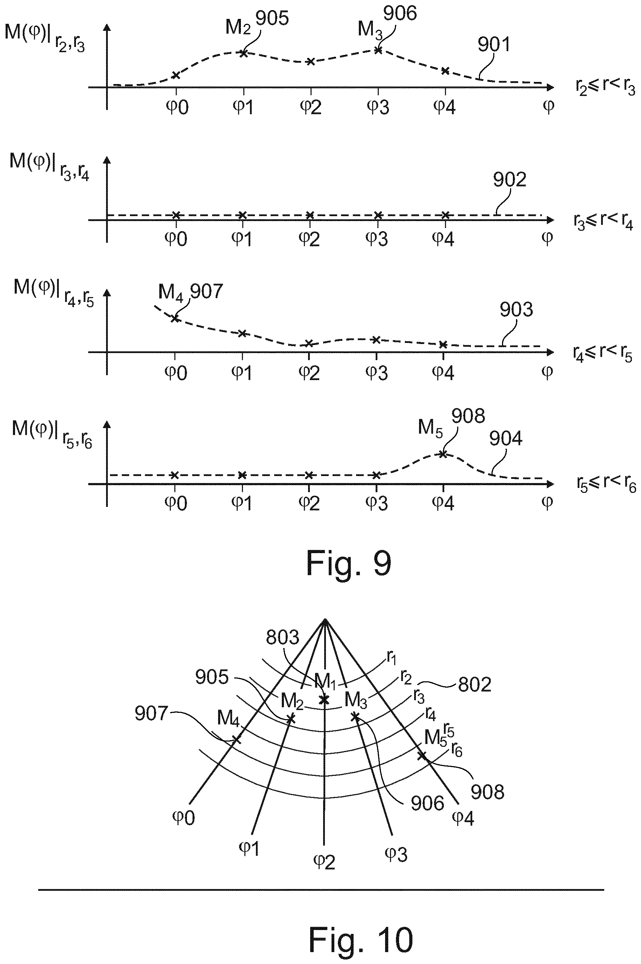

Im Schritt S5104 wird nun überprüft, ob bereits alle interessierenden Entfernungszellen abgearbeitet worden sind. Ist dies nicht der Fall, so wird im Schritt S5105 die nächste Entfernungszelle selektiert und in gleicher Art und Weise ausgewertet. Figur 9 zeigt die dabei entstehenden Maximafunktionen 901, 902, 903, 904.

In Fig. 10 sind die in die Ergebnismatrix 802 eingetragenen lokalen Maxima M2, M3, M4 und M5 (905, 906, 907, 908) zu sehen.

Die ermittelten Stützstellen 803, 905, 906, 907, 908 erzeugen ein Abbild der Topologie der Schüttgutoberfläche 401. Bei Bedarf kann durch bekannte Interpolationsverfahren die Lage weiterer Stützstellen approximiert werden. Weiterhin kann durch bekannte Umrechnungsverfahren die Ergebnismatrix (802) von der Polarkoordinatendarstellung in eine Darstellung mit kartesischen Koordinaten umgerechnet werden.

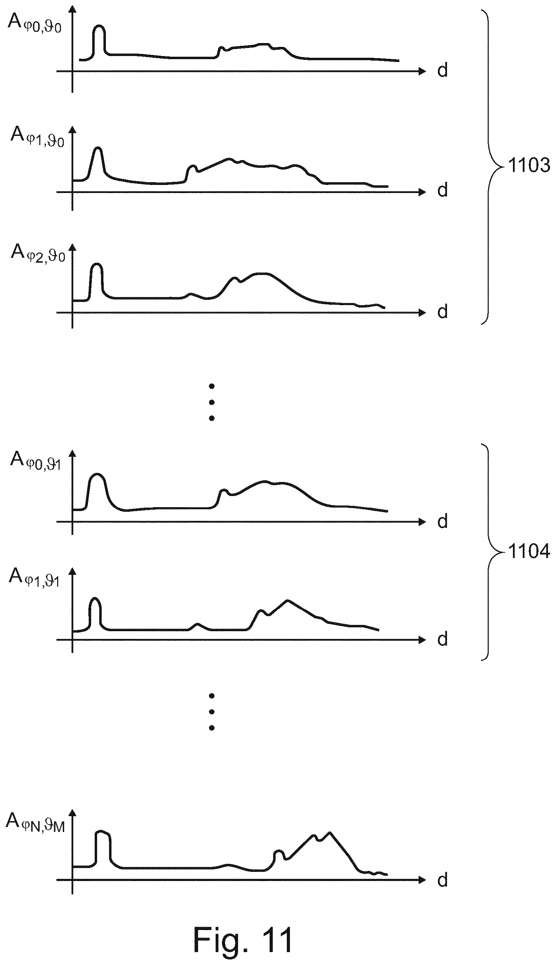

Das zuvor vorgestellte Verfahren zur Erfassung der Topologie lässt sich auf drei Dimensionen erweitern. Fig. 11 zeigt eine zugehörige Messsituation zur Erfassung der notwendigen Echokurven.

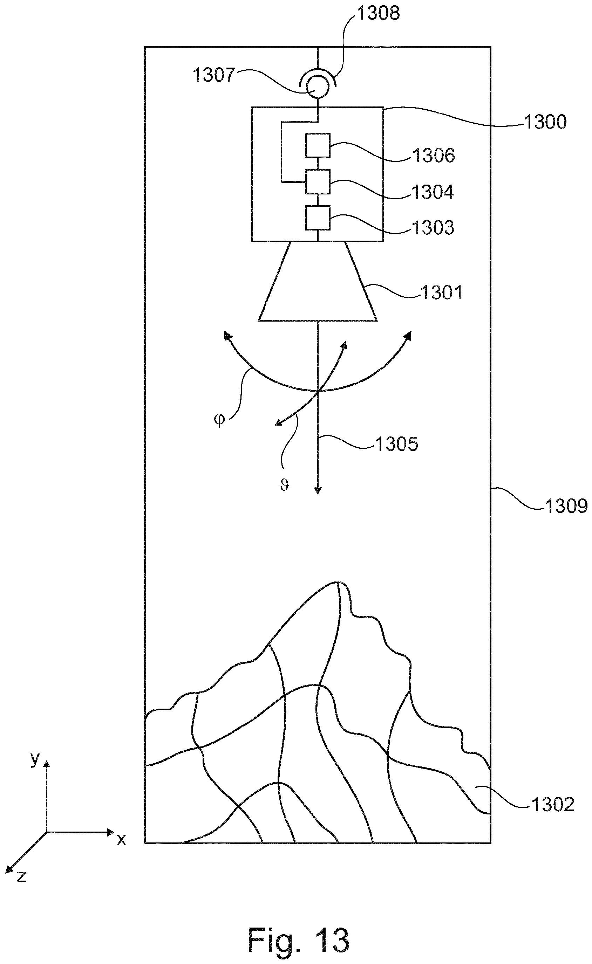

Das erfindungsgemäße Füllstandmessgerät 1300 ist sowohl in Azimutrichtung $(\varphi)$ als auch in Elevationsrichtung $(\vartheta)$ dreh- und verstellbar gelagert. Die zu bestimmende Topologie der Oberfläche 1302 einer Schüttguthalde ist in Fig. 13 ebenfalls dargestellt.

Die Erfassung der Daten entspricht vom Prinzip her dem in Fig. 4 für den zweidimensionalen Fall skizzierten Ablauf - nur dass nun auch über dem Elevationswinkel $(\vartheta)$ Echokurven erfasst werden. Fig. 11 zeigt beispielhaft die hierbei erfassten Echokurven. Zunächst wird bei feststehendem Elevationswinkel $\vartheta_0$ der interessierende Bereich für die Winkel $\varphi_i$ durchlaufen. Die dabei erfassten Echokurven 1103 werden im Speicher 1306 des Füllstandmessgerätes abgelegt. Anschließend wird der Elevationswinkel auf $\vartheta_1$ verändert, woraufhin wiederum Echokurven 1104 über der Winkelrichtung $\varphi$ erfasst werden. Das Verfahren erfasst auf diese Weise eine Vielzahl von Echokurven aus den interessierenden Bereichen für $\vartheta$ und $\varphi$.

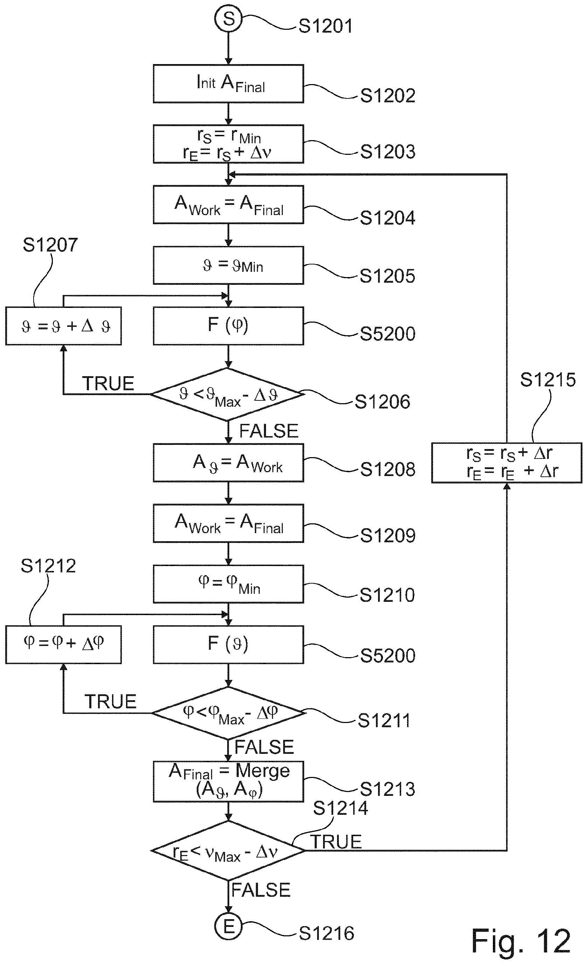

Nach Abschluss der Datenerfassung wird aus den gemessenen Echokurven eine Topologie der Schüttgutoberfläche 1302 ermittelt. Fig. 12 zeigt ein hierfür geeignetes Verfahren. Dazu umfasst das Füllstandmessgerät einen Speicher 1306 zum Bereithalten der Werte von vier jeweils dreidimensionalen Matrizen $A_{Work}$,$A_{\varphi}$, $A_{\vartheta}$,$A_{Final}$ (vgl. Fig. 13).

Das Verfahren beginnt im Startzustand S1201. Im Schritt 1202 wird die Ergebnismatrix $A_{Final}$ 802 geleert. Daran anschließend wird im Schritt S1203 äquivalent zum Schritt S5102 aus Figur 5 eine Entfernungszelle definiert, welche im dreidimensionalen Fall ein Segment einer Kugelschale repräsentiert. Im Schritt 1204 werden die Inhalte der Ergebnismatrix $A_{Final}$ in die lokale Arbeitsmatrix $A_{Work}$ übernommen.

Im Schritt S1205 wird durch Festlegung des Elevationswinkels $\vartheta = \vartheta_{min}$ die Auswertung zunächst auf den zweidimensionalen Fall beschränkt. Folglich wird im Schritt S5200 eine konventionelle Auswertung umfassend die Schritte S5201 bis S5211 entsprechend dem Ablaufdiagramm von Fig.5 über zwei Dimensionen durchgeführt. Diese Berechnung wird unter Verwendung der Arbeitsmatrix $A_{Work}$ realisiert. In den Schritten S1206 und S1207 wird die Auswertung über weitere Winkel von $\vartheta$ erreicht. Nach Ablauf dieser Verfahrensschritte ist die dreidimensionale Arbeitsmatrix $A_{Work}$ mit den Maxima in Winkelrichtung $\vartheta$ belegt.

Als Vorbereitung für die weitere Auswertung wird im Schritt S1208 die auf diese Art besetzte, dreidimensionale Arbeitsmatrix $A_{Work}$ kopiert und an separater Stelle im Speicher abgelegt. Die kopierte Matrix mag fortan mit $A_\vartheta$ bezeichnet sein. Außerdem werden alle Einträge aus der Originalmatrix entfernt. Anschließend werden im Schritt S1209 die Inhalte der Ergebnismatrix $A_{Final}$ in die lokale Arbeitsmatrix $A_{Work}$ übernommen.

In den Schritten S1210 bis S1212 wird die Auswertung bei jeweils festgelegtem Azimutwinkel $\varphi$ nach dem bereits oben dargestellten Verfahren durchgeführt. Nach Ablauf dieser Verfahrensschritte ist die dreidimensionale Ergebnismatrix mit den Maxima in Winkelrichtung $\varphi$ belegt. Die Inhalte der so entstandenen Matrix werden in die im Speicher vorgehaltene Matrix $A_\varphi$ übernommen.

Im Schritt S1213 wird die Ergebnismatrix $A_\varphi$ mit der im Schritt S1208 erstellten Ergebnismatrix $A_\vartheta$ zusammengeführt. In die in einem dritten Speicherbereich vorgehaltene, endgültige Ergebnismatrix $A_{Final}$ wird genau dann ein entsprechender Eintrag übernommen, wenn sowohl die Matrix $A_\vartheta$ als auch die Matrix $A_\varphi$ an der Koordinate $\left[\frac{r_1+r_2}{2}; \varphi_i; \vartheta_i\right]$ einen Eintrag enthält.

Im Schritt S1214 und im Schritt S1215 wird - falls notwendig - in die nächste Entfernungszelle (welche die Form einer Kugelschale aufweisen kann) gewechselt.

Nach Abarbeitung aller interessierenden Entfernungszellen endet das Verfahren im Schritt S1216.

Die Einträge der Ergebnismatrix erzeugen ein Abbild der Topologie der Schüttgutoberfläche 1302. Bei Bedarf kann durch Anwendung bekannter Interpolationsverfahren die Lage weiterer Stützstellen approximiert werden. Weiterhin kann durch Anwendung bekannter Umrechnungsverfahren die Ergebnismatrix $A_{Final}$ von der Polarkoordinatendarstellung in eine Darstellung mit kartesischen Koordinaten umgerechnet werden.

Fig. 13 zeigt eine Messanordnung gemäß einem Ausführungsbeispiel der Erfindung. Es ist ein Behälter 1309 vorgesehen, in dem sich ein Schüttgut 1302 befindet. Es mag auch möglich sein, die Erfindung in Verbindung mit Schütthalden ohne Behälter zu nutzen. Im oberen Bereich des Behälters befindet sich ein Füllstandmessgerät 1300, welches am Deckenbereich des Behälters beweglich angebracht ist. Hierfür ist eine Stellvorrichtung vorgesehen, die ein Kugelgelenk 1307, 1308 aufweist, welches ein Verstellen der Ausrichtung des Füllstandmessgeräts entlang der Winkel φ und θ zulässt.

Die Stellvorrichtung weist einen Aktuator auf (nicht dargestellt), der an den Prozessor 1304 des Füllstandmessgeräts angeschlossen ist, so dass die Hauptabstrahlrichtung 1305 der Antennenanordnung 1301 des Füllstandmessgeräts vollautomatisch eingestellt werden kann.

Das von der Antenne empfangene, reflektierte Sendesignal wird der Echokurvenerzeugungseinheit 1303 übergeben, welche daraus eine Echokurve erzeugt, die dann dem Prozessor, also der Auswerteeinheit des Füllstandmessgeräts übergeben wird. Der Prozessor 1304 ist an eine Speichereinheit 1306 angeschlossen, auf welcher die Echokurven und die Topologiedaten, aus welchen die Topologie der Schüttgutoberfläche berechnet werden kann, gespeichert sind.

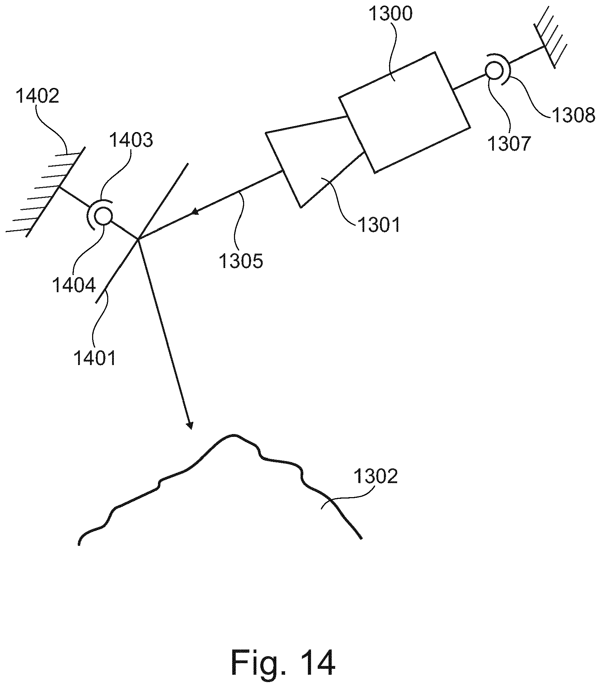

Fig. 14 zeigt eine Messanordnung gemäß einem Ausführungsbeispiel der Erfindung. In diesem Ausführungsbeispiel ist ein Reflektor 1401 vorgesehen, der sich in der Hauptabstrahlrichtung 1305 der Antennenanordnung 1301 des Füllstandmessgeräts befindet und über die Verstelleinrichtung 1403, 1404, die ebenfalls in Form eines Kugelgelenks ausgeführt sein kann, verstellt werden kann. Der stationäre Teil 1403 der Verstellvorrichtung ist beispielsweise an der Behälterwand 1402 angebracht.

Ebenso kann das Füllstandmessgerät, wie auch im Ausführungsbeispiel der Fig. 13, über eine eigene Verstellvorrichtung 1307, 1308 an der Behälterwand angebracht sein.

Beispielsweise ist es möglich, dass sich das Füllstandmessgerät lediglich innerhalb einer Ebene verschwenken lässt und der Spiegel in einer zweiten Ebene verschwenkbar ist, so dass die Schüttgutoberfläche vollständig abgescannt werden kann.

Erfindungsgemäß kann die Topologie einer Schüttgutoberfläche mit einer einzigen Antenne ermittelt werden. Die erfindungsgemäße Antenne mag ausgewählt sein aus der Gruppe der Hornantennen, Stabantennen, Patchantennen oder beliebiger Arrayantennen. Durch den Vergleich einer Vielzahl von Echokurven in einem definierten Bereich bzw. einer definierten Kugelschale (Entfernungszelle) kann die laterale Auflösung eines konventionellen Füllstandmessgeräts weiter verbessert werden, ohne dass hierfür mehrere Sensoren oder mehrere Montagepositionen benötigt werden.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Patentansprüche**

1. Messgerät (1300) zum Bestimmen der Topologie eines Schüttguts (1102), aufweisend:

   eine Antennenanordnung (1301) zum Aussenden eines Sendesignals in eine Hauptabstrahlrichtung der Antennenanordnung (1301) und zum Empfang des zumindest an einer Oberfläche des Schüttguts reflektierten Sendesignals; eine Echokurvenerzeugungseinheit (1303) zum Erzeugen einer Echokurve (402, 403, 404, 405, 406) aus dem reflektierten und von der Antennenanordnung (1301) empfangenen Sendesignal, welche die Signalstärke des reflektierten Sendesignals über einen Entfernungsmessbereich des Messgeräts (1300) widerspiegelt; eine Stellvorrichtung (1307, 1308) zum Ändern der Hauptabstrahlrichtung (1305) der Antennenanordnung (1301), so dass eine Serie von Echokurven (402, 403, 404, 405, 406) unter verschiedenen Hauptabstrahlrichtungen erzeugt werden kann; eine Auswerteeinheit (1304) zum Bestimmen der Topologie des Schüttguts, wobei die Auswerteeinheit zur Bestimmung der Topologie die folgenden Schritte durchführt:

   a) Erfassen einer Vielzahl von Echokurven (402, 403, 404, 405, 406) in verschiedenen Hauptabstrahlrichtungen (410, 411, 412, 413, 414);
   b) Festlegen einer ersten Entfernungszelle (801), bei der es sich um ein bestimmtes Entfernungsintervall zwischen einer ersten Entfernung ($r_S$) und einer zweiten Entfernung ($r_E$) von der Antennenanordnung (1301) handelt;
   c) Bestimmen einer Maximakurve (701), welche für jede Hauptabstrahlrichtung (410, 411, 412, 413, 414) innerhalb der ersten Entfernungszelle (801) im Vergleich zu den übrigen Echokurven (402, 403, 404, 405, 406) die größte Signalstärke aufweist;
   d) Bestimmen von lokalen Maxima auf der Maximakurve (701), wobei die lokalen Maxima Winkelkoordinaten der größten Signalstärke innerhalb der ersten Entfernungszelle (801) sind;
   e) wiederholtes Durchführen der Schritte b) bis e) für weitere Entfernungszellen (801).

2. Messgerät (1300) nach Anspruch 1, wobei die Auswerteeinheit (1304) zur Bestimmung der Topologie weiterhin den folgenden Schritt ausführt:
   f) Erstellen einer Ergebnismatrix (802), welche die in den Schritten d) bestimmten lokalen Maxima enthält.

3. Messgerät (1300) nach einem der vorhergehenden Ansprüche, wobei die Auswerteeinheit (1304) zum Ausführen des folgenden Schritts ausgeführt ist: g) Bestimmen eines Füllstands oder Schüttgutvolumens unter Verwendung der in den Schritten a) bis e) erhaltenen Daten.

4. Messgerät (1300) nach einem der vorhergehenden Ansprüche,
   wobei die Stellvorrichtung (1307, 1308) zur Änderung der Hauptabstrahlrichtung (410, 411, 412, 413, 414) der Antennenanordnung (1301) in zwei Dimensionen ausgeführt ist.

5. Messgerät (1300) nach einem der vorhergehenden Ansprüche,
   wobei die Stellvorrichtung zur Änderung der Hauptabstrahlrichtung (410, 411, 412, 413, 414) der Antennenanordnung (1301) eine mechanische Verstellvorrichtung (1307, 1308) zum Einstellen einer Ausrichtung der Antennenanordnung (1301) aufweist.

6. Messgerät (1300) nach einem der vorhergehenden Ansprüche,
   wobei die Stellvorrichtung (1307, 1308) zur Änderung der Hauptabstrahlrichtung der Antennenanordnung (1301) einen Reflektor (1401) und eine mechanische Verstellvorrichtung (1403, 1404) zur Änderung der Lage des Reflektors und somit der Hauptabstrahlrichtung der Antennenanordnung (1301) aufweist.

7. Messgerät (1300) nach einem der vorhergehenden Ansprüche,
   wobei das Messgerät (1300) als Füllstandmessgerät ausgeführt ist.

8. Messgerät (1300) nach einem der vorhergehenden Ansprüche,
   wobei das Messgerät (1300) als Pulsradargerät oder FMCW-Messgerät ausgeführt ist.

9. Verwendung eines Messgeräts (1300) nach einem der Ansprüche 1 bis 8 zur Bestimmung eines Volumenstroms eines Schüttguts, das sich auf einem Förderband befindet.

10. Verwendung eines Messgeräts (1300) nach einem der Ansprüche 1 bis 8 zur Bestimmung der Masse eines Schüttguts.

11. Verfahren zum Bestimmen der Topologie eines Schüttguts (1102), aufweisend die Schritte:

    Aussenden eines Sendesignals in eine Hauptabstrahlrichtung (1305) der Antennenanordnung (1301);

Empfang des zumindest an einer Oberfläche des Schüttguts reflektierten Sendesignals;
Erzeugen einer Echokurve (402, 403, 404, 405, 406) aus dem reflektierten und von der Antennenanordnung (1301) empfangenen Sendesignal, wobei die Echokurve (402, 403, 404, 405, 406) die Signalstärke des reflektierten Sendesignals über einen Entfernungsmessbereich des Messgeräts (1300) widerspiegelt;
Ändern der Hauptabstrahlrichtung (1305) der Antennenanordnung (1301), so dass eine Serie von Echokurven (402, 403, 404, 405, 406) unter verschiedenen Hauptabstrahlrichtungen (410, 411, 412, 413, 414) erzeugt wird;
Bestimmen der Topologie des Schüttguts, wobei zur Bestimmung der Topologie die folgenden Schritte durchgeführt werden:

a) Festlegen einer ersten Entfernungszelle (801), bei der es sich um ein bestimmtes Entfernungsintervall zwischen einer ersten Entfernung ($r_S$) und einer zweiten Entfernung ($r_E$) von der Antennenanordnung (1301) handelt;
b) Bestimmen einer Maximakurve (701), welche für jede Hauptabstrahlrichtung (410, 411, 412, 413, 414) innerhalb der ersten Entfernungszelle (801) im Vergleich zu den übrigen Echokurven (402, 403, 404, 405, 406) die größte Signalstärke aufweist;
c) Bestimmen von lokalen Maxima auf der Maximakurve (701), wobei die lokalen Maxima Winkelkoordinaten der größten Signalstärke innerhalb der ersten Entfernungszelle (801) sind,;
d) wiederholtes Durchführen der Schritte a) bis c) für weitere Entfernungszellen (801).

12. Programmelement, das, wenn es auf dem Prozessor eines Messgeräts (1300) ausgeführt wird, das Messgerät (1300) veranlasst, die Schritte gemäß Anspruch 11 durchzuführen.

13. Computerlesbares Medium, auf dem ein Programmelement gemäß Anspruch 12 gespeichert ist

**Claims**

1. Measuring device (1300) for determining the topology of a bulk material (1102), comprising:

an antenna arrangement (1301) for emitting a transmission signal in a primary radiation direction of the antenna arrangement (1301) and for receiving the transmission signal reflected at least on a surface of the bulk material;
an echo curve generating unit (1303) for generating an echo curve (402, 403, 404, 405, 406), which mirrors the signal strength of the reflected transmission signal over a distance measurement range of the measuring device (1300), from the transmission signal which is reflected and received by the antenna arrangement;
a positioning device (1307, 1308) for changing the primary radiation direction (1305) of the antenna arrangement (1301) in such a way that a series of echo curves can be generated at different primary radiation directions;
an evaluation unit (1304) for determining the topology of the bulk material, wherein the evaluation unit carries out the following steps to determine the topology:

a) detecting a plurality of echo curves (402, 403, 404, 405, 406) in different primary radiation directions (410, 411, 412, 413, 414);
b) determining a first distance cell (801), which is a particular distance interval between the first distance ($r_S$) and a second distance ($r_E$) of the antenna arrangement (1301);
c) determining a maxima curve (701), which has the greatest signal strength for each primary radiation direction (410, 411, 412, 413, 414) within the first distance cell (801) in comparison with the remaining echo curves (402, 403, 404, 405, 406);
d) determining local maxima on the maxima curve (701), wherein the local maxima are angular coordinates of the greatest signal strength within the first distance cell (801);
e) repeatedly carrying out steps b) to e) for further distance cells (801).

2. Measuring device (1300) according to claim 1, wherein the evaluation unit (1304) further carries out the following step to determine the topology:
f) creating a result matrix (802) which contains the local maxima as determined in steps d).

3. Measuring device (1300) according to any of the preceding claims, wherein the evaluation unit (1304) is further configured to carry out the following step: g) determining a fill level or a bulk material volume using the data obtained in steps a) to e).

4. Measuring device (1300) according to any of the preceding claims, wherein the positioning device (1307, 1308) is configured to change the primary radiation direction (410, 411, 412, 413, 414) of the antenna arrangement (1301) in two dimensions.

5. Measuring device (1300) according to any of the preceding claims,
wherein, for changing the primary radiation direction (410, 411, 412, 413, 414) of the antenna arrangement (1301), the positioning device comprises a mechanical adjustment device (1307, 1308) for setting an orientation of the antenna arrangement (1301).

6. Measuring device (1300) according to any of the preceding claims, wherein the positioning device (1307, 1308) comprises a reflector (1401) for changing the primary radiation direction of the antenna arrangement (1301) and a mechanical adjustment device (1403, 1404) for changing the position of the reflector and thus the primary radiation direction of the antenna arrangement (1301).

7. Measuring device (1300) according to any of the preceding claims,
wherein the measuring device (1300) is configured as a fill level measuring device.

8. Measuring device (1300) according to any of the preceding claims, wherein the measuring device (1300) is configured as a pulsed radar device or an FMCW measuring device.

9. Use of a measuring device (1300) according to any of claims 1 to 8 for determining a volume flow of a bulk material which is located on a conveyor belt.

10. Use of a measuring device (1300) according to any of claims 1 to 8 for determining the mass of a bulk material.

11. Method for determining the topology of a bulk material (1102), comprising the steps of:

emitting a transmission signal in a primary radiation direction (1305) of the antenna arrangement (1301);
receiving the transmission signal reflected at least on a surface of the bulk material;
generating an echo curve (402, 403, 404, 405, 406) from the transmission signal which is reflected and received by the antenna arrangement (1301), wherein the eco curve (402, 403, 404, 405, 406) mirrors the signal strength of the reflected transmission signal over a distance measurement range of the measuring device (1300);
changing the primary radiation direction (1305) of the antenna arrangement (1301) in such a way that a series of echo curves (402, 403, 404, 405, 406) can be generated at different primary radiation directions (410, 411, 412, 413, 414);
determining the topology of the bulk material, wherein the following steps are carried out to determine the topology:

a) determining a first distance cell (801), which is a particular distance interval between the first distance ($r_S$) and a second distance ($r_E$) of the antenna arrangement (1301);
c) determining a maxima curve (701), which has the greatest signal strength for each primary radiation direction (410, 411, 412, 413, 414) within the first distance cell (801) in comparison with the remaining echo curves (402, 403, 404, 405, 406);
d) determining local maxima on the maxima curve (701), wherein the local maxima are angular coordinates of the greatest signal strength within the first distance cell (801);
d) repeatedly carrying out steps a) to c) for further distance cells.

12. Program element which, when executed on the processor of a measuring device (1300), instructs the measuring device (1300) to carry out the step according to claim 11.

13. Computer-readable medium, on which a program element according to claim 12 is stored.

**Revendications**

1. Appareil de mesure (1300) pour déterminer la topologie d'un solide en vrac (1102), comportant :

un système d'antenne (1301) pour envoyer un signal d'émission dans une direction de rayonnement principale du système d'antenne (1301) et pour recevoir le signal d'émission au moins réfléchi sur la surface du solide en vrac ;
une unité de production de courbe d'écho (1303) pour produire une courbe d'écho (402, 403, 404, 405, 406) à partir du signal d'émission réfléchi et reçu par le système d'antenne (1301), lequel reflète l'intensité du signal d'émission réfléchi sur une zone de mesure télémétrique de l'appareil de mesure (1300) ;
un dispositif de réglage (1307, 1308) pour modifier la direction principale de rayonnement (1305) du système d'antenne (1301) de sorte qu'une série de courbes d'écho (402, 403, 404, 405, 406) peut être produite sous différentes directions principales de rayonnement ;
une unité de traitement (1304) pour déterminer la topologie du solide en vrac, dans lequel l'unité de traitement exécute les étapes suivantes pour déterminer la topologie :

a) saisie d'une pluralité de courbes d'écho (402, 403, 404, 405, 406) dans différentes directions principales de rayonnement (410, 411, 412, 413, 414) ;

b) fixation d'une première cellule d'éloignement (801), par laquelle on entend un intervalle d'éloignement défini entre un premier éloignement ($r_S$) et un deuxième éloignement ($r_E$) du système d'antenne (1301) ;
c) détermination d'une courbe de maxima (701), laquelle possède la plus forte intensité de signal en comparaison aux courbes d'écho restantes (402, 403, 404, 405, 406) à l'intérieur de la première cellule d'éloignement (801) pour chaque direction principale de rayonnement (410, 411, 412, 413, 414) ;
d) détermination de maxima locaux sur la courbe de maxima (701), dans lequel les maxima locaux sont les coordonnées angulaires de la plus forte intensité de signal à l'intérieur de la première cellule d'éloignement (801) ;
e) exécution répétée des étapes b) à e) pour d'autres cellules d'éloignement (801).

2. Appareil de mesure (1300) selon la revendication 1, dans lequel l'unité de traitement (1304) met également en œuvre l'étape suivante pour déterminer la topologie :
f) création d'une matrice de résultats (802) contenant les maxima locaux déterminés dans les étapes d).

3. Appareil de mesure (1300) selon l'une des revendications précédentes, dans lequel l'unité de traitement (1304) est réalisée pour la mise en œuvre de l'étape suivante :
g) détermination d'un remplissage ou d'un volume de solide en vrac en utilisant les données obtenues dans les étapes a) à e).

4. Appareil de mesure (1300) selon l'une des revendications précédentes, dans lequel le dispositif de réglage (1307, 1308) est réalisé en deux dimensions pour modifier la direction principale de rayonnement (410, 411, 412, 413, 414) du système d'antenne (1301).

5. Appareil de mesure (1300) selon l'une des revendications précédentes, dans lequel le dispositif de réglage comporte un dispositif d'ajustage mécanique (1307, 1308) pour paramétrer une orientation du système d'antenne (1301) afin de modifier la direction principale de rayonnement (410, 411, 412, 413, 414) du système d'antenne (1301).

6. Appareil de mesure (1300) selon l'une des revendications précédentes, dans lequel le dispositif de réglage (1307, 1308) comporte un réflecteur (1401) pour modifier la direction principale de rayonnement du système d'antenne (1301) et un dispositif d'ajustage mécanique (1307, 1308) pour modifier la position du réflecteur et ainsi la direction principale de rayonnement du système d'antenne (1301) .

7. Appareil de mesure (1300) selon l'une des revendications précédentes, dans lequel l'appareil de mesure (1300) est réalisé comme appareil de mesure de remplissage.

8. Appareil de mesure (1300) selon l'une des revendications précédentes, dans lequel l'appareil de mesure (1300) est réalisé comme radar à impulsions ou comme appareil de mesure à onde entretenue à modulation de fréquence (FMCW).

9. Utilisation d'un appareil de mesure (1300) selon l'une des revendications 1 à 8 pour déterminer un débit volumique d'un solide en vrac se trouvant sur une bande convoyeuse.

10. Utilisation d'un appareil de mesure de remplissage (1300) selon l'une des revendications 1 à 8 pour déterminer la masse d'un solide en vrac.

11. Procédé de détermination de la topologie d'un solide en vrac (1102), comportant les étapes :

envoi d'un signal d'émission dans une direction principale de rayonnement (1305) du système d'antenne (1301) ;
réception du signal d'émission au moins réfléchi sur une surface du solide en vrac ;
production d'une courbe d'écho (402, 403, 404, 405, 406) à partir du signal d'émission réfléchi et reçu par le système d'antenne (1301), dans lequel la courbe d'écho (402, 403, 404, 405, 406) reflète l'intensité du signal d'émission réfléchi sur une zone de mesure télémétrique de l'appareil de mesure (1300) ;
modification de la direction principale de rayonnement (1305) du système d'antenne (1301), de sorte qu'une série de courbes d'écho (402, 403, 404, 405, 406) est produite sous différentes directions principales de rayonnement (410, 411, 412, 413, 414) ;
détermination de la topologie du solide en vrac, dans lequel les étapes suivantes sont exécutées afin de déterminer la topologie :

a) fixation d'une première cellule d'éloignement (801), par laquelle on entend un intervalle d'éloignement défini entre un premier éloignement ($r_S$) et un deuxième éloignement ($r_E$) du système d'antenne (1301) ;
b) détermination d'une courbe de maxima (701), laquelle possède la plus forte intensité de signal en comparaison aux courbes d'écho restantes (402, 403, 404, 405, 406) à l'intérieur de la première cellule d'éloignement (801) pour chaque direction principale de rayonnement (410, 411, 412, 413, 414) ;
c) détermination de maxima locaux sur la courbe de maxima (701), dans lequel les maxima locaux sont les coordonnées angulaires de la plus forte intensité de signal à l'intérieur de la première cellule d'éloignement (801) ;
d exécution répétée des étapes a) à c) pour d'autres cellules d'éloignement (801).

12. Élément de programme qui, lorsqu'il est réalisé sur le processeur d'un appareil de mesure (1300), permet à l'appareil de mesure (1300) d'exécuter les étapes selon la revendication 11.

13. Support lisible par ordinateur sur lequel est enregistré un élément de programme selon la revendication 12.

Fig. 1

Fig. 2

Fig. 3A

Fig. 3B

Fig. 3C

Fig. 3D

Fig. 4

$S$ — S5101

Init $A_{Final}$ — S5102

$r_S = r_{min}$
$r_E = r_S + \Delta r$ — S5103

$M(\varphi)|_{r_S, r_E}$ — S5201

$Max\{M(\varphi)\}$ — S5202

S5203

# Max > 0 — FALSE

TRUE

select 1.Max — S5204

Coord {Max} — S5205

S5210

S5206

$A_{Final}\{Coord\}$ EMPTY — FALSE → Find $A_{Final}(Coord \pm \Delta C)$ EMPTY

S5209

TRUE

S5207

S5211

select next Max

$A_{Final}\{Coord\} = \frac{r_1 + r_2}{2}$

$A_{Final}(Coord \pm \Delta C) = \frac{r_1 + r_2}{2}$

TRUE

more Max — S5208

FALSE

$r_S = r_S + \Delta r$
$r_E = r_E + \Delta r$

TRUE

$r_E < r_{Max} - \Delta r$ — S5104

S5105

FALSE

$E$ — S5106

S5100

S5200

S5100

Fig. 5

16

Fig. 6

Fig. 8

Fig. 7

Fig. 9

Fig. 10

Fig. 11

Fig. 12

Fig. 13

Fig. 14

**IN DER BESCHREIBUNG AUFGEFÜHRTE DOKUMENTE**

**In der Beschreibung aufgeführte Patentdokumente**

- WO 2010003656 A1
- FR 2907546 A1
- DE 3735905 A1